# EUROPEAN PATENT SPECIFICATION

(11) **EP 4 222 203 B1**
(45) Date of publication and mention of the grant of the patent: **31.01.2024**
(21) Application number: 21802630.0
(22) Date of filing: 28.10.2021
(51) Int. Cl.: C08J 7/04, C08J 7/043, B32B 27/30

(54) **COATING AND PRIMER**
BESCHICHTUNG UND PRIMER
REVÊTEMENT ET APPRÊT

(30) Priority: 30.10.2020 SE 2051266; 22.12.2020 SE 2051528
(43) Date of publication of application: 09.08.2023
(73) Proprietor: Mercene Coatings AB, 114 28 Stockholm (SE)
(72) Inventor: HARALDSSON, Tommy, 177 70 JÄRFÄLLA (SE); MIKAELSSON, Henrik, 124 51 BANDHAGEN (SE); HANSSON, Jonas, 117 29 STOCKHOLM (SE); CARLBORG, Carl Fredrik, 117 61 STOCKHOLM (SE)
(74) Representative: Ström & Gulliksson AB
(86) International application number: PCT/EP2021/080048
(87) International publication number: WO 2022/090424

(56) References cited:
- WO-A1-2019/185302
- US-A1- 2015 299 502

## Description

### Technical field

The present invention relates generally to a coating or a primer. A further coating, a topcoat can if desired be applied on the coating. The thin coating is made by contacting a substrate surface with a compound or a mixture, and then initiating a reaction forming a covalent bond by irradiating photoreactive groups on the surface of the substrate or reactive chemical groups in the liquid mixture, which react with photoreactive chemical groups on the surface.

### Background

In many industrial processes, it is desirable to have a dry and thin film with remaining reactive groups, attached to a substrate. This film is used at a later stage to attach a coating or glue another object such as a film to the first substrate.

In the polymer film industry, rollers are used to tension the film web and the rollers come in contact with both surfaces of the film wherefore a liquid, partially liquid or very sticky film risks to cause contamination of the rollers with an increased risk of transferring dust and other unwanted surface defects. In other cases, it is desired to activate a surface in one site and use the activated surface at another site with transport in between, which is made much easier if the surfaces of the activated substrate are dry.

The standard approach to ensure interlayer adhesion in multilayer UV curing coating systems according to the state of the art is to deliberately undercure the first lacquer. The next lacquer layer then reacts with the previous layer's undercured top, which ensures good bonding. In acrylate systems, the undercuring is typically conducted via oxygen inhibition, which tends to leave a thin, less reacted layer in the top portion of the lacquer. Once the next layer is applied, oxygen ceases to have an effect and the oxygen-inhibited layer is reacted together with the bottom portion of the subsequent layer, yielding perfect interlayer adhesion. If carefully executed during manufacture, it is possible to have a dry to the touch film with a sufficient amount of remaining reactive groups to obtain good bonding to the next layer.

In very thin coating layers, the oxygen inhibition approach is impractical since it is very difficult to control that bulk polymerization proceeds to film formation while leaving a submicron portion oxygen inhibited since atmospheric oxygen diffusion typically affects the top 1-3 microns of a coating

JP 5568311 discloses nanoparticles that adhere to a substrate via a polymerizable group on the nanoparticle. The nanoparticles can be in the form of an additive to a monomer mixture or in an emulsion or a solution and are attached to the substrate using actinic radiation. The so attached nanoparticles can be used as is or as an adhesion promoter for subsequent layers.

US 7,455,891 discloses a method for attaching a thin primer layer on a corona, plasma or flame activated surface. The primer is in solution, emulsion, or suspension form and dried before actinic radiation reacts the primer with the surface using electromagnetic waves. The primer can form the final coating or be the base for a second coating, which forms the final surface.

JP 2006510774 discloses a method for adhering a film to a corona, low temperature plasma, flame or intense radiation treated organic or inorganic surface, using a primer, which comprises an initiator or an initiator monomer blend in the form of a melt, suspension, solution or emulsion form. The method involves a first heating step and optionally a step with actinic radiation to form an adherent layer. A further coating is applied and reacts with the primer layer to form the final article.

US 6,733,847 discloses a method for attaching a thin primer layer on a corona, plasma or flame activated surface. The primer comprises a monomer, which has a hydrogen-donating group and an ethylenically unsaturated group. The layer is spontaneously attached to the surface via the hydrogen donating groups. The layer can subsequently be reacted with a coating composition capable of reacting with the ethylenic unsaturation to form the final coated object.

JP 2014063762 discloses a silicone aqueous dispersion primer formulation cured with actinic light for polymer resin surfaces.

US 4,495,020 discloses a primer composition containing isocyanates to provide a surface suitable for gluing polyester plastic articles to other or the same type of plastic articles.

US 9,692,412 discloses a coating formulation for plastics and transparent inorganic substrates where the coating formulation contains a polyacrylate, a diisocyanate, a polyether polyol and a compound containing a photopolymerizable and a hydroxyl group.

US 2003/01502767 discloses a primer composition comprising a polymer reacted with for instance maleic anhydride.

EP 0574352 discloses a process for modifying the surface characteristics of a preformed polymer substrate to impart altered properties thereto by graft polymerization on the substrate which includes: placing the polymer substrate in a plasma to form free radicals on the substrate; contacting the substrate having free radicals with oxygen to form hydroperoxy groups on the surface of the substrate; and graft polymerizing an ethylenically unsaturated monomer and a cross-linking agent onto the surface of the polymer substrate.

US 2017/0290955 discloses a medical device for implantation in a body, the medical device comprising: a polymer substrate; and a layer of poly(vinyl pyrrolidone-alt-maleic anhydride) formed on a surface of the polymer substrate, wherein polymer chains of the poly(vinyl pyrrolidone-alt-maleic anhydride) are entangled with the polymer substrate to form a lubricious, hydrophilic layer.

US 6,582,754 discloses a process for coating a material surface, comprising the steps of: (a) covalently binding a compound comprising an ethylenically unsaturated double bond to the material surface; (b) polymerizing a monomer comprising a reactive or crosslinkable group on the surface and thereby providing a primary polymer coating comprising reactive or crosslinkable groups, (c) in case of a monomer comprising a reactive group in step (b) reacting the reactive groups of the primary coating with a further compound comprising an ethylenically unsaturated double bond and graft-polymerizing a hydrophilic monomer and optionally a co-monomer having a crosslinkable group onto the primary coating obtained according to step (b) and (d) in case of crosslinkable groups being present in step (b) or (c) initiating crosslinking of said groups.

CN 104945983 and CN 104945985 disclose monofunctional methacrylates forming polymer chains with maleic acid anhydride. There is in a first step formed a poly-anhydride which in a subsequent step reacts with epoxy. Thus, the anhydride is reacted to a poly-anhydride. Since monofunctional methacrylates are used, no cross-linked network is formed. In the introduction there is disclosed that there is first synthesized an acrylic resin having pendant anhydride groups, which is then subjected to a modified epoxy resin, epoxy-modified acrylic resin prepared by the preparation of one-component epoxy modified acrylic coatings having excellent adhesion, good hardness and gloss.

US 2019/263072 discloses a method for bonding composite substrates wherein a curable surface treatment layer is applied onto a curable composite substrate, followed by co-curing. After co-curing, the composite substrate is fully cured but the surface treatment layer remains partially cured. The surface treatment layer may be a resin film or a peel ply composed of resin-impregnated fabric. If a peel ply is used, the peel ply is peeled off after co-curing, leaving behind a remaining thin film of partially cured resin. A subsequent dry physical surface treatment, such as plasma, is carried out to physically modify the surface of the surface treatment layer. After dry physical surface treatment, the composite substrate is provided with a chemically-active, bondable surface, which is adhesively bonded to another composite substrate to form a covalently-bonded structure.

US 5,254,395 discloses a coating system, which forms a highly abrasion resistant, chemical resistant, impact resistant protective finish for a substrate. The coating system is based upon using two coatings of different characteristics but having excellent adhesion to one another. The outermost or surface coating layer is a highly crosslinked hard polymer, which is adhered to an underlying base coating layer of a compatible softer polymer. The outer hard polymer preferably comprises a highly crosslinked acrylic copolymer derived from at least 40 percent by weight of a multifunctional aliphatic acrylate monomer of three or more functional groups, while the underlying softer polymer preferably comprises a crosslinked aliphatic urethane acrylate copolymer and the multifunctional aliphatic acrylate monomer of three or more functional groups.

GB 2107723 discloses a process for treating substrates, which are curable by exposure to actinic radiation, said process comprising preparing a solution comprising water, from 0. 1 to 75% by weight of acrylic acid and from 0.01 to 5% by weight of a suitable surfactant, depositing a layer of said solution on said substrate, and exposing the treated substrate in actinic radiation.

US 8,227,050 discloses a UV curable coating composition, which includes one or more monomers, one or more multifunctional oligomers, one or more pigments, one or more photoinitiators, and volatile organic solvent.

WO 2012/042059 discloses a method for the manufacture of articles of thiol-ene polymers comprising the steps: a) reacting a compound comprising at least two thiol groups and a compound comprising at least two carbon-carbon double bonds, in off stoichiometry ratios to obtain a first intermediate article, wherein said first intermediate article comprises at least one unreacted group selected from an unreacted thiol group and an unreacted carbon-carbon double bond, and b) contacting said first intermediate article with a second article, wherein the surface of said second article at least partially comprises reactive groups and reacting at least a part of said unreacted groups on said first intermediate article with chemical groups on said second article to obtain covalent bonds and forming a final article.

WO 2019/185302 discloses a primer formulation for melamine where it was observed that a complex formed between the secondary amine and a carbon-carbon double bond could be initiated by actinic radiation. This invention is useful for coatings when a sufficient amount of actinic radiation can penetrate through the liquid layer to create a sufficient amount of covalent links between the substrate and the coating.

It is desirable to be able to provide coatings also on other substrates than those comprising a secondary amine. Regarding thermoset substrates comprising a secondary amine, the elastic modulus is high, for instance for melamine formaldehyde the elastic modulus is above about 7 GPa. The added layer in WO2019/185302 on the other hand has a considerably lower elastic modulus and it would be desirable to provide a substrate and an associated coating technology where the difference in elastic modulus between the substrate and the applied layer(s) is lower.

For primers according to the prior art the curing has to be adjusted so that a sufficient number of reactive groups is left when the primer has been applied. It is desirable to provide a method, which is less sensitive to the curing conditions and in particular less sensitive to too much curing.

A problem in the prior art is that certain impurities or deliberately added compounds such as antioxidants in the substrate may act as inhibitors so that a reaction with conventional photoinitiators to form a film are not possible or at least hampered.

It is still also a problem in the prior art to provide a primer which can be cured to a dry state, i.e. dry to the touch to simplify handling before a subsequent coating is applied and cured.

### Summary

It is an object of the present invention to obviate at least some of the disadvantages in the prior art and to provide an improved coating and/or primer.

According to the invention there is provided a method of coating a substrate, the method comprising the sequential steps of:
a) providing a substrate, said substrate comprising at least one chemical group selected from the group consisting of an aromatic ring, a sulphur, and a peroxide, wherein at least a fraction of the at least one chemical groups are at the surface of the substrate,
b) contacting at least a part of the substrate surface with one of:
   i) a compound comprising at least one carbon-carbon double bond, wherein the compound optionally comprises a chemical group capable of abstracting a hydrogen, and
   ii) a mixture comprising a first monomer M₁ and a second monomer M₂, wherein the monomers are capable of undergoing a polymerization reaction to form a copolymer covalently bound to the substrate, wherein at least one of the ratios r₁ and r₂ is smaller than 0.45, and wherein one of k₁₁ and k₂₂ is at least 10 times larger than the other one, with the exception for r₁=r₂=0 when the condition regarding k₁₁ and k₂₂ does not apply, wherein r₁ = k₁₁/k₁₂ and r₂ = k₂₂/k₂₁,

   wherein k₁₁ is the propagation rate constant for the propagation reaction of adding a monomer M₁ to a growing copolymer chains ~M₁*,
   wherein k₁₂ is the propagation rate constant for the propagation reaction of adding a monomer M₂ to a growing copolymer chains ~M₁*,
   wherein k₂₁ is the propagation rate constant for the propagation reaction of adding a monomer M₁ to a growing copolymer chains ~M₂*,
   wherein k₂₂ is the propagation rate constant for the propagation reaction of adding a monomer M₂ to a growing copolymer chains ~M₂*,
c) initiating a reaction with actinic radiation to form a covalent bond by reaction of the at least one chemical group at the surface of the substrate and i) the compound or ii) the monomers M₁ and M₂, so that a i) polymer or ii) copolymer covalently bound to the substrate surface is formed,
d) applying at least one of a coating and a sheet on the substrate surface, and
e) curing the at least one coating.

The invention is highly suitable for applications where an improved adhesion to various substrates is desired.

Further, in particular when a top coating is added on the coating, the resulting surface has a high hardness, and the scratch resistance is improved. When for instance a thermoplastic sheet or film is added, then the abrasion resistance is improved.

The elastic modulus of the substrates according to the present invention is better matched to the elastic modulus of the applied layer(s) compared to the prior art. For instance, a substrate comprising PP or PET according to the present invention has an elastic module lower than 3 GPa, which is better matched to the elastic modulus of the added layer(s) comprising acrylates. Thus, a weakening layer with much different elastic modulus can be avoided using the present invention.

Further, an advantage is that the primer can be cured to a state which is not sticky or wet where after a top-coat or a subsequent coating is applied and cured.

The method according to the invention is less sensitive to the curing conditions and in particular less sensitive for a very high dose of actinic radiation. The reaction method according to invention provides a stop to the reaction after step c) by the initial composition and any remaining excess groups are essentially insensitive to overcuring within reasonable boundaries, ensuring a sufficient amount of remaining reactive groups for reactions with a second layer, in a later subsequent step.

The method is suited to actinic radiation curing under inert conditions, for example in a nitrogen atmosphere. The method is less sensitive to top surface overcuring due to the absence of oxygen inhibition than current primer formulations.

The method according to this invention is less sensitive to aging due to the low homopolymerization rate of the reactive group in excess after cure and the glassy state, which hampers diffusion thus lowering further the homopolymerization.

### Detailed description

Before the invention is disclosed and described in detail, it is to be understood that this invention is not limited to particular compounds, configurations, method steps, substrates, and materials disclosed herein as such compounds, configurations, method steps, substrates, and materials may vary somewhat. It is also to be understood that the terminology employed herein is used for the purpose of describing particular embodiments only and is not intended to be limiting since the scope of the present invention is limited only by the appended claims and equivalents thereof.

It must be noted that, as used in this specification and the appended claims, the singular forms "a", "an" and "the" include plural referents unless the context clearly dictates otherwise.

If nothing else is defined, any terms and scientific terminology used herein are intended to have the meanings commonly understood by those of skill in the art to which this invention pertains.

As used herein (meth)acrylate is a general term that encompasses both acrylate and methacrylate.

As used herein a photoreactive group means a chemical group that is essentially chemically inert under the relevant conditions and that become reactive when exposed to actinic radiation. Typically, but not always, the actinic radiation is ultraviolet light.

As used herein hydrogen abstraction is the removal of a hydrogen atom from a molecule. A chemical group capable of abstracting a hydrogen is thus a chemical group capable of removing a hydrogen atom.

All percentages and ratios are calculated by weight throughout the description and the claims, unless otherwise indicated. For instance, the ratio r is calculated based on the number of chemical groups and not weight.

According to the invention there is provided a method of coating a substrate, the method comprising the sequential steps of:
a) providing a substrate, said substrate comprising at least one chemical group selected from the group consisting of an aromatic ring, a sulphur, and a peroxide, wherein at least a fraction of the at least one chemical groups are at the surface of the substrate,
b) contacting at least a part of the substrate surface with one of:
   i) a compound comprising at least one carbon-carbon double bond, wherein the compound optionally comprises a chemical group capable of abstracting a hydrogen, and
   ii) a mixture comprising a first monomer M₁ and a second monomer M₂, wherein the monomers are capable of undergoing a polymerization reaction to form a copolymer covalently bound to the substrate, wherein at least one of the ratios r₁ and r₂ is smaller than 0.45, and wherein one of k₁₁ and k₂₂ is at least 10 times larger than the other one, with the exception for r₁=r₂=0 when the condition regarding k₁₁ and k₂₂ does not apply, wherein r₁ = k₁₁/k₁₂ and r₂ = k₂₂/k₂₁,

   wherein k₁₁ is the propagation rate constant for the propagation reaction of adding a monomer M₁ to a growing copolymer chains ~M₁*,
   wherein k₁₂ is the propagation rate constant for the propagation reaction of adding a monomer M₂ to a growing copolymer chains ~M₁*,
   wherein k₂₁ is the propagation rate constant for the propagation reaction of adding a monomer M₁ to a growing copolymer chains ~M₂*,
   wherein k₂₂ is the propagation rate constant for the propagation reaction of adding a monomer M₂ to a growing copolymer chains ~M₂*,
c) initiating a reaction with actinic radiation to form a covalent bond by reaction of the at least one chemical group at the surface of the substrate and i) the compound or ii) the monomers M₁ and M₂, so that a i) polymer or ii) copolymer covalently bound to the substrate surface is formed,
d) applying at least one of a coating and a sheet on the substrate surface, and
e) curing the at least one coating.

Consider two different monomers M₁ and M₂. If we consider growing copolymer chains ~M₁* and ~M₂*, where monomers M₁ and M₂ are added to one end of the polymer chains respectively, then we have the following reactions:

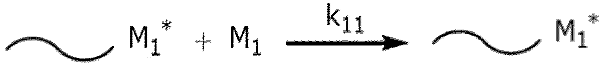

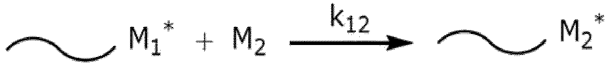

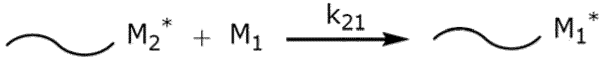

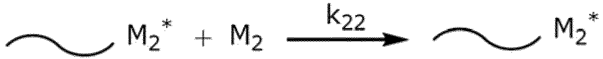

Then r₁ and r₂ are defined as r₁ = k₁₁/k₁₂ and r₂ = k₂₂/k₂₁, where k₁₁, k₁₂, k₂₁, and k₂₂ are propagation rate constants for the propagation reactions above. r₁ is interpreted as the reactivity of ~M₁* with M₁ versus ~M₁* with M₂. r₂ is interpreted as the reactivity of ~M₂* with M₂ versus ~M₂* with M₁. The growing polymer chains are copolymers with either M₁ and M₂ in one end. At least a part of the copolymers are covalently bound to the substrate surface. Copolymers which are not covalently bound to the surface are in one embodiment, washed away after the reaction. The ratios r, r₁, and r₂ are different ratios.

At least one of r₁ and r₂ is smaller than 0.45. Either r₁ is smaller than 0.45 or r₂ is smaller than 0.45, or both r₁ and r₂ are smaller than 0.45. In one embodiment, at least one of r₁ and r₂ is smaller than 0.1. In one embodiment, at least one of r₁ and r₂ is smaller than 0.05. In one embodiment, one of r₁ and r₂ is zero or close to zero. In one embodiment, both r₁ and r₂ are zero or close to zero. The ratios indicate that homopolymerization is supressed in one of the reactions.

Regarding the rate constants k₁₁ and k₂₂, one of them is at least 10 times larger than the other one, 10*k₁₁ ≤ k₂₂ or 10*k₂₂ ≤ k₁₁. This gives that the homopolymerization rate is much faster in one of the reactions compared to the other. This selection of parameters allows the polymerization of the coatings to be applied and cured in different steps. After the first curing there will be reactive groups left for the second curing reaction. When r₁=r₂=0, there will be an alternating copolymer without homopolymerization and then the condition regarding k₂₂ and k₁₁ does not apply. This also applies when both r₁ and r₂ are roughly 0 so that r₁ ≈ r₂ ≈ 0. This condition is fulfilled when r₁ and r₂ both are below 0.05.

For a mixture with a low k₂₂ and r₁ > r₂, M₂ will be the remaining group to be reacted later even if there is a surplus of M₁. The term monomer is to be interpreted as a polymerizable unit so that both monomers and polymerizable oligomers are encompassed. Thus, it is possible to carry out the reaction with oligomers, which are polymerized.

According to the invention, in step b) the substrate surface is contacted with a mixture comprising a first monomer M₁ and a second monomer M₂. The first monomer M₁ and the second monomer M₂ are one of the following options
i) an acrylate and a maleate,
ii) an acrylate and a vinyl ether,
iii) a methacrylate and a vinyl ether,
iv) an acrylate and an allyl ether,
v) a methacrylate and a maleate,
vi) a methacrylate and a maleimide,
vii) an acrylate and a maleimide
viii) a vinyl ether and a maleate, and
ix) a styrene and a maleate.

The first monomer M₁ and the second monomer M₂ are chosen from one of the options i) to ix). The options i) to ix) contain two different groups for each option and the first and second monomers are selected so that there is one of each. The first monomer M₁ and the second monomer M₂ are in one embodiment an acrylate and a maleate. The first monomer M₁ and the second monomer M₂ are in another embodiment an acrylate and a vinyl ether. The first monomer M₁ and the second monomer M₂ are in another embodiment a methacrylate and a vinyl ether. The first monomer M₁ and the second monomer M₂ are in another embodiment an acrylate and an allyl ether. The first monomer M₁ and the second monomer M₂ are in another embodiment a methacrylate and a maleate. The first monomer M₁ and the second monomer M₂ are in another embodiment a methacrylate and a maleimide. The first monomer M₁ and the second monomer M₂ are in another embodiment an acrylate and a maleimide. The first monomer M₁ and the second monomer M₂ are in another embodiment a vinyl ether and a maleate. The first monomer M₁ and the second monomer M₂ are in another embodiment a styrene and a maleate. Thus the first monomer M₁ and the second monomer M₂ can be the above mentioned selected pairs.

The above pairs of monomers fulfil the requirements regarding the capability of undergoing a polymerization reaction to form a copolymer covalently bound to the substrate. The above pairs of monomers also fulfil the requirements that at least one of the ratios r₁ and r₂ is smaller than 0.45, and further that one of k₁₁ and k₂₂ is at least 10 times larger than the other one. Thus, the above list of pairs of monomers can replace the above general requirements for the monomers.

The method comprises the step: d) applying at least one of a coating and a sheet on the substrate surface. Either a liquid coating can be applied, which then preferably is cured, or a sheet or a film can be applied. Thus, one selected from a liquid coating, a sheet and a film is applied in step d).

The method comprises a subsequent step e) of curing the at least one coating or sheet applied in step d). Such a step e) is performed after step d). If the coating is the final coating it may also be referred to as a top coat. In particular, when a top coating is added on the coating, the resulting surface has a high hardness, and the scratch resistance is improved. If the outermost layer is an applied film, the abrasion resistance can be improved. In one embodiment, a second coating is applied after step c). This second coating can be referred to as a topcoat if no further coatings are to be applied. The properties of the resulting finished coated substrate including the topcoat is drastically improved when using the present method. In one embodiment, at least one further coating is applied after step c). Thus, the coating is used as a primer in one embodiment. The coating can also be used as a single coating or as a top coat on another coating.

In one embodiment, the second layer applied in step d) is an article such as a thermoplastic sheet. When added, design elements such as an embossed structure is enabled. When added, abrasion resistance is much improved.

In one embodiment, the sheet comprises polypropylene and/or polyethylene, or other polymeric material, which have the advantage of being transparent to actinic radiation capable of initiating surface reactions of photoactive groups, situated on the surface away from the light in contact with a liquid comprising carbon-carbon double bond. Thus, an applied sheet is fixed to the surface by curing with actinic radiation, which is applied through the applied sheet and reaches the interface between the applied sheet and the substrate surface.

In another embodiment, the thermoplastic sheet comprising PET, which is activated by irradiation on at least one surface, where after the sheet, is contacted with the treated substrate in step d) where the irradiated surface of the sheet is facing downwards to the substrate. The procedure will be necessary since PET is typically not transparent to the relevant wavelengths.

In one embodiment, an acrylate-based coating is applied as the at least one further coating, i.e. the second coating.

In one embodiment, the method further comprises a step where at least a part of i) the compound or ii) the mixture, which has not reacted to form covalent bonds is removed after step c). The excess molecules as well as other optional additives can be removed by washing or other suitable means.

For instance, corona, plasma or flame surface activated polyolefins, polymers containing aromatic groups, polymers containing ether and polymers containing sulphur can successfully be coated. The adhesion of a subsequent top coat is greatly improved. In one embodiment, the substrate comprises at least one selected from the group selected from polyolefins, polymers containing aromatic groups, polymers containing ether groups, and polymers containing sulphur. In one embodiment, the surface is treated prior to step b) with at least one selected from the group consisting of corona treatment, plasma treatment and flame treatment.

There are a number of different substrates, which can be used in the present invention. In one embodiment, the substrate comprises at least one selected from the group consisting of polyethylene terephtalate (PET), polypropylene (PP), polyethylene (PE), polymethylmethacrylate (PMMA), poly p-phenylene oxide (PPO), acrylonitrile butadiene styrene (ABS), polyvinylchloride (PVC), polystyrene (PS), polyether ether ketone (PEEK), and polycarbonate (PC).

In one embodiment, there is an electron withdrawing group adjacent to the at least one carbon-carbon double bond in the compound. In one embodiment, there are electron withdrawing groups on both sides of the at least one carbon-carbon double bond in the compound. When a compound comprising at least one thiol group is present, the electron withdrawing groups have the advantage of giving a faster reaction.

In one embodiment, i) the compound or ii) the first monomer M₁ and the second monomer M₂ are dissolved in at least one solvent before contacting with the substrate surface. In an alternative embodiment i) the compound or ii) the first monomer M₁ and the second monomer M₂ are not dissolved or diluted in a solvent before contacting with the substrate surface. In the latter embodiment i) the compound or ii) the first monomer M₁ and the second monomer M₂ are used in pure form. Also in the latter embodiment, additional additives can be added to i) the compound or ii) the first monomer M₁ and the second monomer M₂ are. In an embodiment i) the compound or ii) the first monomer M₁ and the second monomer M₂ are not dissolved or diluted in a solvent there is the possibility to select i) a compound or ii) a first monomer M₁ and a second monomer M₂ with low viscosity so that it can be roller coated in a suitable thickness in an efficient way.

In one embodiment, the substrate surface is further contacted with at least one compound comprising at least one thiol group in step b). In one embodiment, the ratio (r) in step b) between the number of thiol groups and the number of carbon-carbon double bonds fulfils 0.05 ≤ r ≤ 20. In another embodiment the ratio r fulfils 0.2 ≤ r ≤ 5. In an alternative embodiment, the ratio r fulfils one of 0.3 ≤ r ≤ 0.9 and 1.1 ≤ r ≤ 3, the latter embodiment thus requires off stoichiometry between the thiol groups and the carbon-carbon bonds. The addition of thiol has the advantage that the surface can be made dry so that the surface of the substrate is dry after step c). Then the substrate is easier to handle and a further coating can be applied later in a step d). (The ratio r is different from the ratios r₁ and r₂).

In one embodiment, i) the compound or ii) the first monomer M₁ and the second monomer M₂ to be contacted with the substrate surface in step b) are pure substances and in an alternative embodiment of step b), the substrate surface is contacted with a formulation comprising i) the compound or ii) the first monomer M₁ and the second monomer M₂ are. Such a formulation may also comprise additional compounds, additives, and a solvent.

In one embodiment, i) the compound or ii) the first monomer M₁ and the second monomer M₂ are ink-jetted on the surface in step b). In one embodiment, i) the compound or ii) the first monomer M₁ and the second monomer M₂ are contacted with at least a part of the substrate surface by ink-jet in step b). In addition, or alternatively, other known methods of application can be used, such as for instance roller coating, anilox roll, spraying, and dipping and so on.

In one embodiment, the first monomer M₁ is an acrylate and wherein r₁ is below 10. This embodiment also applies if instead the second monomer M₂ is an acrylate. This will improve the binding together with the acrylate.

In one embodiment, one of r₁ and r₂ is above 0.1. This will promote film formation.

In one embodiment, one of k₁₁ and k₂₂ is below 3000 l/(mol s). This will reduce the propensity of overcuring. It is very difficult to overcure such a mixture. The propagation constant is measured with the rotating sector method.

In one embodiment, a Norrish type II photoinitiator is contacted with the substrate surface in step b). Additional substances to be contacted with the substrate surface in step b) such as a Norrish type II photoinitiator are in one embodiment, added together with i) the compound or ii) the first monomer M₁ and the second monomer M₂. In an alternative embodiment, they are added separately before and/or after i) the compound or ii) the mixture is contacted with the substrate surface. In one embodiment, a photoinitiator is in the mixture in step b). In one embodiment, a Norrish type II photoinitiator is in the mixture in step b).

Photoinitiators based on hydrogen abstraction may also be referred to a Norrish type II photoinitiators. Electrically excited carbonyl compounds are hydrogen abstractors that are considered Norrish type II photoinitiators. Carbonyl compounds suitable as the Norrish type II photoinitiator include aromatic ketones and quinones, such as, for example, benzophenones, ketosulphones, thioxanthenes, 1,2-diketones, anthraquinone, fluorenones, xanthones, acetophenone derivatives, benzoin ethers, benzyl ketals, phenylglyoxylates, mono- and bis-acylphosphine. In one embodiment, the Norrish Type II initiator is an initator selected from the group consisting of a benzophenone, a thioxanthone, a 1,2-diketone and an anthraquinone. Suitable Norrish type II initiators are disclosed by CRIVELLO J.V. et al. in "Volume III: Photoinitiators for Free Radical Cationic & Anionic Photopolymerization ", 2nd edition, edited BRADLEY G., London, United Kingdom, John Wiley & Sons Ltd, 1998, pp. 287-294, which is incorporated herein in its entirety by reference.

In one embodiment, the Norrish type II photoinitiator is present in the formulation to be added in step b) in an amount of 0.1 to 15% by weight, based on the weight of the photosensitive composition that is brought in contact with the substrate surface.

In one embodiment, the contacting in step b) is made by application of a layer with a thickness in the interval 0.2 - 20 µm. Application techniques known to a skilled person can be used to apply i) the compound or ii) the first monomer M₁ and the second monomer M₂ and other components in step b).

In one embodiment, all components to be added in step b) are provided in a single formulation. This simplifies the addition. Then all compounds and additional substances are applied in one mixture.

In one embodiment, i) the compound or ii) the first monomer M₁ and the second monomer M₂ to be applied in step b) are provided in an acidic mixture. For certain applications, the acidity improves the shelf life. In one embodiment, the formulation is acidic and comprises a Norrish type II photoinitiator in addition to i) the compound or ii) the first monomer M₁ and the second monomer M₂. The low pH in an acidic formulation improves the shelf life of the Norrish type II photoinitiator. The combination of a Norrish type II photoinitiator and acidic pH is particularly suitable to improve the shelf life of the formulation to be added in step b).

In one embodiment, the irradiation is made by UV radiation. Many photoreactive groups become reactive by UV irradiation with suitable energy.

In one embodiment, the surface in step b) is contacted with i) the compound or ii) the first monomer M₁ and the second monomer M₂ in a pattern. This provides a possibility of making a partial treatment of the substrate surface in a desired pattern. Thus it is possible to form patterns by applying i) the compound or ii) the first monomer M₁ and the second monomer M₂ in a desired pattern.

In one embodiment, the irradiation is made in a pattern. This provides an additional possibility of making a surface modification of the substrate surface in a desired pattern. The irradiation in a pattern is made by known methods such as application of a mask or irradiation with a laser. Thus, there is the possibility to form patterns on the substrate by only irradiating parts of the surface, where the photosensitive groups are.

In one embodiment, the thickness of an applied layer comprising i) the compound or ii) the first monomer M₁ and the second monomer M₂, and the absorbance of the applied layer at the wavelength of the actinic radiation are adapted so that the reaction is still initiated in step c). After studying the description, the skilled person is able to adjust the thickness of the applied layer as well as the absorbance of the applied formulation so that sufficient irradiation reaches the substrate surface when the layer is applied. The absorbance is adjusted by adjusting the concentration(s) of components in the formulation which are absorbing actinic radiation of the relevant wavelengths. The Beer-Lambert law can aid the skilled person in this regard.

In one embodiment at least the step c) is carried out in an inert atmosphere. In another embodiment the steps b), and c), are carried out in an inert atmosphere. In another embodiment the steps b), c), and d) are carried out in an inert atmosphere. In another embodiment the steps b), c), d), and e) are carried out in an inert atmosphere. In another embodiment the steps a), b), c), d), and e) are carried out in an inert atmosphere. In one embodiment the inert atmosphere comprises 98 wt% or more, preferably 99 wt% or more of an inert gas, more preferably 99.5 wt% or more of an inert gas. Alternatively, the inert atmosphere comprises 95 wt% or more of an inert gas. In one embodiment the inert atmosphere comprises 2 wt% or less of oxygen, preferably 1 wt% or less of oxygen, more preferably 0.5 wt% or less of oxygen. In one embodiment the inert gas comprises nitrogen. Using an inert atmosphere makes the method is less sensitive to top surface overcuring due to the absence of oxygen inhibition.

In the second aspect there is provided a substrate coated according to the method described above.

The substrate comprises molecules being peroxides, and or sulphur and or aromatic groups, which are accessible at the surfaces. A compound comprising at least one C=C double bond is added to the substrate. Alternatively, a first monomer M₁ and a second monomer M₂ are added to the substrate.

It is a very important feature that the reaction is initiated by irradiation of the chemical group at the substrate surface directly. The chemical group at the surface of the substrate absorbs energy directly from the actinic radiation. Such chemical groups can also be referred to as photoreactive groups. In case of a peroxide, the peroxide is cleaved into a surface bound alkoxy radical and a free hydroxy radial or alkoxy radical depending on the molecular structure of the surface bound peroxide.

A substituted phenyl group is excited with UV to form a triplet or singlet state. The excited states are capable of reacting with carbon-carbon double bonds in numerous ways.
a) In the presence of hydrogen donors, the triplet state of the substituted phenyl ring (terephthalate in the case of PET) formed with UV radiation of certain minimum energy forms a biradical structure on the phenyl ring. These radicals are capable of forming covalent links with carbon-carbon double bonds, or they form peroxy radicals in the presence of atmospheric oxygen which upon hydrogen abstraction form peroxides which upon cleaving in UV light forms alkoxy radicals capable of reacting with carbon-carbon double bonds to form a covalent bond.
b) In some cases a radical anion is formed, which can react with an electron poor carbon-carbon double bond through anionic addition reactions.

No photoinitiator is required although it is added in some embodiments. Actually, addition of a photoinitiator is most often not suitable since it is likely to absorb actinic radiation, which then cannot be utilized for initiating the reaction. Only small insignificant amount of UV-absorbing compounds such as photoinitiators should generally be tolerated. Amounts of photoinitiators which are normally used to initiate various reactions are generally too high. In one embodiment, no photoinitiators are added. A photoinitiator or another compound that absorbs actinic radiation is in one embodiment, not be present at all. Under some conditions, certain amounts of certain photoinitiators can be tolerated and can be used. Such conditions include:
a) The wavelengths at which the chemical groups at the surface of the substrate absorbs energy is sufficiently different from the wavelengths at which the photoinitiator absorbs light.
b) The applied layer comprising a photoinitiator is very thin so that a sufficient amount of radiation reaches the chemical groups at the surface of the substrate anyway, and/or the applied layer comprising a photoinitiator is dilute so that a sufficient amount of radiation reaches the chemical groups at the surface of the substrate anyway.

The above conditions can also be combined with an increase in the intensity and/or dose of the actinic radiation.

Primer coatings according to the prior art are normally applied in layers ranging between 10-30 microns and are designed to form a film with a minimum amount of UV dose. The UV dose below 370 nm reaching the bottom of the layer is invariably very small. Adhesion for such films according to the prior art is either through surface energy matching or via secondary spontaneous reactions between hydroxyl groups present after corona treatment and an isocyanate group in the primer.

It is required that actinic radiation reaches the substrate surface through a layer of applied solution since the chemical groups are at the substrate surface. In the comparable prior art, photoinitiators or other UV-blocking compounds are utilized in similar systems, which makes this method impossible to use, or impossible to observe in most systems since no or too little actinic radiation reaches the surface. The inventors believe that this is the reason for not having observed this effect before.

A covalent bond is formed as a result of the reaction. A covalent bond can be verified by, for instance, inability to remove the film by boiling the substrate and film in water for 2 hrs. A removed film indicates a lack of covalent bonds. A film which still adheres after a few hours (2 hours) of boiling in water may indicate either the presence of covalent bonds and/or the presence of molecular entanglements, i.e. an IPN (interpenetrating Network)-like structure. Thus a removed film ensures that there are no covalent bonds. However, a film which still adheres after a few hours of boiling in water may indicate covalent bonds or alternatively entanglements of polymer chains. Thus, in order to ensure that there is a covalent bond if the film still adheres it would be necessary to rule our entanglements of the polymer chains, i.e. an IPN-like structure.

Covalent bonding may be distinguished from adhesion that comes from IPN-like morphology by taking a crosscut of the coated substrate and inspecting the interface between the substrate and coating. In the case of predominately covalent bond adhesion, the surface structure of the substrate will remain essentially intact whereas in the case of predominantly IPN-like morphology there will be a transition zone, different from the original substrate surface structure, between the coating and the substrate which is detected via spectroscopic measurements (for example IR or Raman microscopy), SEM, optical microscopy or similar methods. When adhesion from an IPN-like morphology has been ruled out, then it can be concluded that there must be covalent bonds.

In general, the levels of any photoinitiators or other absorbing compounds must not be so high that the reaction of the chemical groups at the surface of the substrate are not initiated. Thus in one embodiment, a photoinitiator is present in an amount, which does not prevent initiating a reaction to form a covalent bond by reaction of a cleaved chemical group at the surface of the substrate and the carbon-carbon double bond.

In general, the film formation through consumption of double-bonds should not be too rapid so that an insufficient amount of actinic radiation is allowed to form covalent bonds between carbon-carbon double bonds and the photoreactive groups before the carbon-carbon double bonds are consumed or hindered from diffusing to the surface by the high viscosity of the evolving network.

The delayed gelation in thiol-enes where the viscosity remains essentially unchanged before the gel point is suitable to counteract this effect if necessary, since diffusion of carbon-carbon double bonds is rapid until late in the film formation. Furthermore, the ability of initiator free initiation of thiol-enes is advantageous since very little actinic radiation at effective wavelengths is absorbed allowing a large portion of the actinic radiation to reach the photoreactive groups on the surface. These are thus further advantages of adding a compound comprising at least one thiol group.

The actinic radiation (typically UV-radiation) should reach the surface of the substrate where the photosensitive groups are located. This can be achieved by irradiation on the surface. In one embodiment, this can be achieved by irradiation through the substrate provided that it is transparent at the relevant wavelength and/or very thin. A solution comprising the compound comprising at least one C=C double bond should not absorb too much of the actinic radiation. The product of the thickness of such an applied solution and the absorption at the relevant wavelength should not be too high so that sufficient actinic radiation can reach the surface of the substrate where the photosensitive groups are. A higher absorption of radiation in such a solution can to some extent be compensated with a thinner applied solution.

The same principles that at least an efficient amount of the actinic radiation should reach the groups at the surface applies also to the coating solution and/or sheet applied in step d). In such embodiments, the light path goes through the coating solution or sheet before reaching the opposite surface of the thermoplastic sheet. In the case of thermoplastic sheets according to the prior art, UV active glues are designed to react very rapidly to form a solid polymer where essentially all carbon-carbon double bonds are consumed in too short a time frame to observe covalent bonding via actinic radiation activation of photoreactive groups on the thermoplastic sheet surface facing the applied primer. This explains why the effect has not been noticed before.

The below table gives examples of suitable pairs of monomers M₁ and M₂ which are suitable to use together in the present invention.

| M₁ | M₂ | r₁ (calcula ted) | r₂ (calcula ted) | k₁₁ (l/(mol s)) | k₂₂ (l/(mol s)) |
|---|---|---|---|---|---|
| Acrylate | Maleate | 22.2 | 0.04 | 11000-18000 | low |
| Acrylate | Vinyl ether | 5.7 | 0 | 11000-18000 | low |
| Methacrylate | Vinyl ether | 16 | 0 | 700-2200 | low |
| Acrylate | Allyl ether | 0.91 | 0 | 1100-18000 | low |
| Metyhacrylate | Maleate | 13.6 | 0.04 | 700-2200 | low |
| Methacrylate | Maleimide | 20.2 | 0.03 | 700-2200 | low |
| Vinyl ether | Maleate | 0.01 | 0.11 | Low | low |
| Styrene | Maleate | 4.19 | 0.01 | 100-350 | low |

The r₁ and r₂ values have been calculated using the Alfrey Price Q-e scheme, where r₁=(Q1/Q2)exp[-e1(e1-e2)] and r2=(Q2/Q1)exp[-e2(e2-e1)]. Published Q and e values for monomer pairs can be used to estimate r₁ and r₂ in cases where the actual copolymerization has not been studied in detail. The k₁₁ and k₂₂ are taken from the literature.

For k₂₂ the term "low" in the table denotes a value which is much lower than the k₁₁ value, i.e. more than 10 times lower. For the case where both r₁ and r₂ are very close to zero this does not apply. Very close to zero is interpreted as below 0.05.

| Functional group | Q | e |
|---|---|---|
| Acrylate | 0.92 | 0.75 |
| Methacrylate | 0.57 | 0.3 |
| Vinyl ether | 0.03 | -1.49 |
| Allyl ether | 0.079 | -2.65 |
| Styrene | 1 | -0.8 |
| Maleate | 0.053 | 1.08 |
| Fumarate | 0.24 | 2.26 |
| Maleimide | 0.035 | 1.013 |

Maleate and fumarate are both present in unsaturated polyesters and are thus encompassed in the invention, although kinetic constants differ slightly from each other.

K₁₁ is the propagation rate constant for M₁ homopolymerisation and k₂₂ is the propagation rate constant for M₂ homopolymerization as described more in detail above.

It is to be understood that this invention is not limited to the particular embodiments shown here. The embodiments are provided for illustrative purposes and are not intended to limit the scope of the invention since the scope of the present invention is limited only by the appended claims and equivalents thereof.

### Examples

### Example 1 (Bo-PET)

A thin film of Bo-PET (Biaxially oriented Polyethylene terephthalate) was cut into pieces and used as substrates. The pieces were wiped clean with IPA (Isopropylalcohol). A thin layer of either pure hexanediol diacrylate (HDDA) or a commercial UV-curing acrylate-based topcoat from Bona AB containing photo initiator (UE1664) was applied in an approximately 1 µm thick layer (1g/sqm) on the PET film as a primer. The PET film with the primer layer was put in a curing device comprising a conveyor belt and a fixed medium pressure mercury lamp that gives light in UVA, UVB, UVC and UW. Different UV-doses were tested.

The surface properties of the primer layer directly after UV-exposure was tested using a gloved finger and a spatula to determine if the primer layer had cured or not. If the gloved finger or spatula left traces in the primer layer, the surface was determined to be "wet". If the gloved finger or spatula did not leaved any traces in the primer layer, the surface was determined to be "dry". If parts of the surface was dry, and other parts were wet, or the very faint traces could be observed, the surface was determined to be "almost dry". If the surface was sticky to the touch of the gloved finger, the surface was determined to be "sticky". These results are presented under "Surface properties" in the table below.

Subsequently, a thicker layer of the UV-curing acrylate-based topcoat from Bona AB (UE1664) was applied using a 22 um rod applicator on top of the primer layer and was given a UV dose of 1.4 J/cm² (UVA) in the same curing device, which rendered the layers fully cured and dry.

The adhesion of the coating layers to the substrate was tested using a standard tape test ("cross-hatch test") in accordance with the cross-cut test described in ISO 2409. In short, cuts are made through the coating to the substrate in a square pattern with 25 areas each being approximately 1mm². The tape was pressed onto the coating and pulled off quickly. The resulting damage are evaluated by evaluating the amount of coating that has been removed by the tape, where CH=0 is the best adhesion (no removal of coating), and CH=5 is the worst adhesion (all or almost all coating is removed).

As a reference, no primer layer was applied on the PET film before the 22 µm thick UV-curing acrylate-based topcoat was applied, cured, and tested in the same way as described above.

The results are presented in the below table.

| **Sample nr.** | **Primer** | **UV (mJ/cm2 UVA)** | **Surface properties** | **Cross-hatch** |
|---|---|---|---|---|
| #1 | HDDA | 700 | Wet | CH=0 |
| #2 | HDDA | 1400 | Almost dry | : CH=0 |
| #3 | UE1664 | 700 | Almost dry | CH=0 |
| #4 | UE1664 | 1400 | Dry | CH=5 |
| #5 | No | - | - | CH=3-4 |

The results in the table above shows that by using a thin primer layer of either pure HDDA or the UV-curing acrylate topcoat UE1664 which activates the surface of the substrate when exposed to UV light, adhesion is significantly improved compared to the reference case (#5). However, when the thin UE1664 is cured until dry, interlayer adhesion between the primer layer and the thick topcoat fails and consequently the cross-hatch test fails. This demonstrate the difficulties in obtaining a dry primer layer, which is needed in some applications, and still maintain interlayer adhesion with a subsequently applied coating layer.

### Example 2 (PET)

Another example following exactly the same procedure as above but using as substrate of 2 mm thick sheets of PET (Polyethylene terephthalate) bought from Nordbergs Tekniska AB.

| **Sample nr.** | **Substrate** | **Primer** | **UV (mJ/cm2 UVA)** | **Surface properties** | **Cross-hatch** |
|---|---|---|---|---|---|
| #6 | PET | HDDA | 700 | Wet | CH=0 |
| #7 | PET | none | - | - | CH=4 |

With the thin primer layer of HDDA before the topcoat, the cross-hatch gave excellent results on the PET sheets. Without the surface

### Example 3 (BoPET, thicker HDDA)

Another experiment using the same method and substrate as Example 1 was performed, but instead of applying 1 µm primer layer an approximately 14 µm thick layer of HDDA was applied. In this case, the uncured HDDA on the PET-substrate was wiped off before applying the topcoat.

| **Sample nr.** | **Primer** | **UV (mJ/cm2 UVA)** | **Surface propertie s** | **Cross-hatch** |
|---|---|---|---|---|
| #8 | 14 µm HDDA | 440 | Wet | CH=0 |
| #9 | 14 µm HDDA | 1400 | Wet | CH=0 |
| #10 | No | - | - | CH=3-4 |

### Example 4 (off-stoichiometric acrylates on boPET)

Another experiment using the same method and substrates as in Example 1 was performed as primer using either a formulations of 70 wt% HDDA (1,6-Hexanediol diacrylate) and 30 wt% PETMA (Pentaerythritol-tetramercaptoacetat) (Formulation "A") or a formulation of 69.75 wt% HDDA, 29.75 wt% PETMA and 0.5 wt% ITX (Formulation "B"), where ITX is a Norrish type II photoinitiator. Both of these formulations have a thiols/acrylates ratio of about 0.5 and thus approximately 100% off-stoichiometry of acrylate functional groups relative thiol functional groups. The primer layers were as before applied in an approximately 1 µm thick layer (1g/sqm).

Adhesion of the coating to the substrate was tested using the cross-hatch test.

Some of the samples were subsequently submerged in boiling water for 2hrs, dried and retested with the cross-hatch test.

| **Sample nr.** | **Primer** | **UV (mJ/cm2 UVA)** | **Surface propert ies** | **Cross-hatch** | **Cross-hatch after boiling for 2 hrs** |
|---|---|---|---|---|---|
| #11 #12 | Formulation A | 220 | Wet | CH=0 | - |
| | Formulation A | 525 | Almost dry | CH=0 | CH=0 |
| #13 | Formulation A | 700 | Dry | CH=0 | CH=0 |
| #14 | Formulation B | 525 | Dry | CH=0 | - |
| #15 | No | - | - | CH=3-4 | - |

The results above show that formulation A and B both passes the cross-hatch test even when dry, i.e. interlayer adhesion does not fail. Moreover, the adhesion is unaffected for the tested samples even after 2 hrs of boiling.

### Example 5 (PP)

Two different types of polypropylene (PP) substrates were used as substrates: i) raw PP sheets of different colours ("homogenous PP") and ii) filled PP films of different colours ("filled PP"), all uncoated.

The substrates were wiped clean with IPA and corona treated using a handheld Laboratory Corona Treater (Model BD-20, from Electro-technic products inc.), moving the electrode on a distance of 5-10 mm over 30cm² large substrate for 30s, right before application of the primer layer (or top coat, in the in the case of the references without primer).

The primer formulations used were "formulation A" and "formulation B", both described in an example above, and a formulation consisting of the monomer SR9020 from Sartomer with 3% of ITX, a Norrish type II photoinitiator (called formulation "C").

A thin primer layer was applied on the substrates as described above in an approximately 1 µm thick layer (1g/m²). The substrates and primer were then exposed in the same "Hg" mercury curing device as described in Example 1, but in one case the primer layer was exposed to a 365 nm UV LED exposure device instead (3000 mJ/cm2 at 365 nm, 30 mW/cm²). After the exposure the surface properties of the primer was examined using a gloved finger and a spatula as described in Example 1. The same topcoat as in Example 1 was finally applied with a 22 µm rod applicator and cured in the Hg mercury curing device using a dose of 1400 mJ/cm² (UVA).

As references, no primer layer was applied on the corona treated substrates before the 22 µm thick UV-curing acrylate-based topcoat was applied and cured as in Example 1.

Evaluation was done with cross-hatch test as described in Example 1.

Some of the samples were subsequently submerged in boiling water for 2hrs, dried and retested with the cross-hatch test.

| **Sampl e nr.** | **Substrat e** | **Primer** | **UV** | **Surface propert ies** | **Cross-hatch** | **Cross-hatch after boiling for 2 hrs** |
|---|---|---|---|---|---|---|
| #16 | Homogeno us PP (natural ) | Formula tion B | 525 mJ/cm2 (UVA) Hg | Wet | CH=3 | - |
| #17 | Homogeno us PP (natural ) | Formula tion B | 3000 mJ/cm2 365 nm LED | Almost dry | CH=3 | - |
| #18 | Homogeno us PP (natural ) | Formula tion A | 1400 mJ/cm2 (UVA) Hg | Dry | CH=3 | - |
| #19 | Homogeno us PP (natural ) | None | - | - | CH=5 | - |
| #20 | Homogeno us PP (black) | Formula tion A | 1400 mJ/cm2 (UVA) Hg | Dry | CH=1-2 | - |
| #21 | Homogeno us PP (black) | None | - | - | CH=5 | - |
| #22 | Filled PP (white) | Formula tion A | 1400 mJ/cm2 (UVA) Hg | Dry | CH=0 | CH=0 |
| #23 | Filled PP (white) | Formula tion C | 660 mJ/cm2 (UVA) Hg | Wet | CH=0 | - |
| #24 | Filled PP (white) | None | - | - | CH=5 | - |
| #25 | Filled PP (dark) | Formula tion C | 525 mJ/cm2 (UVA) Hg | Wet | CH=0 | - |
| #26 | Filled PP (dark) | None | - | - | Topcoa t not cured | - |

| | | | | | | |
|---|---|---|---|---|---|---|
| Note that on the dark coloured substrates of the filled PP (#26) the topcoat layer of 22µm UE1664 does not cure at all. | | | | | | |

### Example 6 (PE)

In another experiment using exactly the same method as in Example 4 (IPA wipe, corona treatment, primer application, UV, topcoat application and UV) was used but on a raw polyethylene (PE) surface bought from Nordbergs Tekniska AB, quality "PE1000 natur".

| **Sample nr.** | **Subs trate** | **Primer** | **UV** | **Surface properties** | **Cross-hatch** | **Cross- hatch after boiling for 2 hrs** |
|---|---|---|---|---|---|---|
| #27 | PE | Formulatio n A | 1400 mJ/cm2 (UVA) Hg | Dry | CH=0 | CH=0 |
| #28 | PE | - | - | - | CH=0 | |

### Example 7 (Variation of off-stoichiometry)

As substrates were used filled PP (dark) as described previously.

As primer layers were used formulations consisting of variations of Formulation A (HDDA and PETMA), with a varying amount of off-stoichiometry calculated as the ratio of thiol- to acrylate-groups.

The PP substrates were first wiped clean with IPA and subsequently treated with corona (exactly as described in Example 5).

The primer formulations were then immediately applied to a thickness of approximately 1 µm thick layer (1g/sqm) and exposed to a UV mercury lamp with a dose of 2x700 mJ/cm2 as measured in UVA (same procedure as in Example 1).

Immediately after each 700 mJ/cm2 (UVA) pass, the surfaces were tested with a gloved finger and a spatula as determine surface properties, as described in Example 1. Thereafter an approximately 22pm (22g/sqm) thick layer of the UV acrylate topcoat UE1664 was applied using a rod applicator and cured by exposing to 1400 mJ/cm2 as measured in UVA.

Finally, adhesion of the coating was tested using the cross-hatch test as described in Example 1.

| **Sample nr.** | **Ratio thiol/acrylate functional groups** | **Off-stoichiometry of acrylate functional groups** | **Surface after 700/1400 mJ/cm2 UVA** | **Cross-hatch** |
|---|---|---|---|---|
| #29 | 0.95 | 0% | Dry/Dry | CH=1 |
| #30 | 0.67 | 43% | Dry/Dry | CH=0 |
| #31 | 0.43 | 123% | Sticky/dry | CH=0 |
| #32 | 0.25 | 282% | Sticky/dry | CH=0 |
| #33 | 0.1 | 760% | Wet/Sticky | CH=0 |
| #34 | No primer | - | - | CH=5 |

### Example 8 (double bonds)

In this example the following substrates were used: Filled PP (dark), BoPET and PE (all previously described).

As primer layers were used the monomers DVE-3 (Triethylene Glycol Divinyl ether) or TAOE (Tetra(allyloxy)ethane.

The Filled PP (dark) substrate was corona treated exactly as described in Example 5. The BoPET and PE substrates were not corona treated.

The primer layers were applied to an approximate thickness of 1 µm (1g/sqm) and UV-cured using a Hg mercury lamp as before (2×700 mJ/cm2 as measured in UVA). Thereafter an approximately 22 µm thick layer of the UV acrylate UE1664 was applied and UV-cured (1400 mJ/cm2 as measured in UVA).

Finally, adhesion of the coating was tested using the cross-hatch test as described above.

| **Sample nr.** | **Substrate** | **Primer layer** | **Cross-hatch** |
|---|---|---|---|
| #35 | PP filled (dark) | DVE-3 | CH=3-4 |
| #36 | PP filled (dark) | TAOE | CH=2 |
| #37 | BoPET | DVE-3 | CH=0 |
| #38 | BoPET | TAOE | CH=1 |
| #39 | PET | DVE-3 | CH=0 |
| #40 | PET | None | CH=0 |

### Example 9

Several different materials were used as substrates. The materials used were: "BoPET film", a thin film of transparent Bo-PET (Biaxially oriented Polyethylene terephthalate); "PET film", a thin film (0.1 mm thick) of transparent PET (Polyethylene terephthalate) bought from Nordbergs Tekniska AB; "PET 2mm", a 2 mm thick sheet of white PET (Polyethylene terephthalate) bought from Nordbergs Tekniska AB; "Filled PP", a sheet of opaque and glossy filled PP bought from Direktlaminat AB; "PE film", thin film (0.25 mm thick) of polyethylene (PE) bought from Nordbergs Tekniska AB; "PE 6mm", a 6 mm thick sheet of raw PE (polyethylene) bought from Nordbergs Tekniska AB (quality "PE1000 natur"); "PMMA 2mm", a 2 mm thick sheet of transparent PMMA (Poly(methyl methacrylate)) bought from Nordbergs Tekniska AB; and "Acrylate", a cured acrylate surface.

The cured "Acrylate" surface was prepared by using a grey melamine board bought from Direktlaminat AB, applying a 1 µm thick layer of M1814 from Mercene Labs, UV-curing at 600 mJ/cm² (UVA) in a medium pressure mercury lamp, applying 12 µm of a UV-curing acrylate-based topcoat from Bona AB (UE1664), and UV-curing at 1400 mJ/cm² (UVA) in a medium pressure mercury lamp which rendered the layers fully cured and dry.

All the above materials were cut into pieces and used as substrates. The pieces were wiped clean with a dry piece of tissue paper.

Two different primers formulations were prepared: "Formulation X" using 49.4 wt% Ebecryl 2221 from Allnex Belgium SA/NV (a hexafunctional aromatic urethane acrylate oligomer ), 49.4 wt% Rapi-Cure DVE-3 (triethyleneglycol divinylether), and 1.6 wt% Speedcure-2 ITX from Lambson Limited (a Norrish Type II photoinitiator of the thioxanthone family, 2-Isopropylthioxanthone); and "Formulation Y" using 48.8 wt% Trimethylolpropane Diallyl Ether 90 bought from Perstorp Specialty Chemicals AB, 48.8 wt% Ebecryl 2221, and 2.4 wt% Speedcure-2 ITX from Lambson Limited.

All substrates made from PE or PP (i.e. "Filled PP", "PE film", and "PE 6mm") were corona treated using a handheld Laboratory Corona Treater (Model BD-20, from Electro-technic products inc.), moving the electrode on a distance of 5-10 mm over 30cm² large substrate for 30s, right before application of the primer layer (or top coat, in the case of the references without primer).

A thin layer of either "Formulation X" or "Formulation Y" was applied in an approximately 1 µm thick layer (1g/sqm) on the substrates as primers. The substrates with the primer layer was put in a curing device comprising a conveyor belt and a fixed medium pressure mercury lamp that gives light in UVA, UVB, UVC and UW, and there exposed to total dose of 600 mJ/ cm² (UVA).

The surface properties of the primer layer directly after UV-exposure was tested using a gloved finger and a spatula to determine if the primer layer had cured or not. If the gloved finger or spatula left traces in the primer layer, the surface was determined to be "wet". If the gloved finger or spatula did not leaved any traces in the primer layer, the surface was determined to be "dry". If parts of the surface was dry, and other parts were wet, or the very faint traces could be observed, the surface was determined to be "almost dry". These results are presented under "Surface properties" in the table below.

Subsequently, a thicker layer of the UV-curing acrylate-based topcoat from Bona AB (UE1664) was applied using a 22 um rod applicator on top of the primer layer and was given a UV dose of 1.4 J/cm² (UVA) in the same curing device, which rendered the layers fully cured and dry.

The adhesion of the coating layers to the substrate was tested using a standard tape test ("cross-hatch test") in accordance with the cross-cut test described in ISO 2409. In short, cuts are made through the coating to the substrate in a square pattern with 25 areas each being approximately 1mm². The tape was pressed onto the coating and pulled off quickly. The resulting damage are evaluated by evaluating the amount of coating that has been removed by the tape, where CH=0 is the best adhesion (no removal of coating), and CH=5 is the worst adhesion (all or almost all coating is removed).

As a reference, no primer layer was applied on substrates before the 22 µm thick UV-curing acrylate-based topcoat was applied, cured, and tested in the same way as described above.

The results are presented in the below table.

| **Substrate** | **Primer** | **UV (mJ/cm2 UVA)** | **Surface properties** | **Cross-hatch** |
|---|---|---|---|---|
| BoPET film | X | 600 | Dry | CH=0 |
| BoPET film | Y | 600 | Dry | CH=0 |
| BoPET film | no (ref. ) | - | - | CH=5 |
| PET film | X | 600 | Dry | CH=0 |
| PET film | Y | 600 | Almost dry | CH=0 |
| PET film | no (ref. ) | - | - | CH=5 |
| PET 2mm | X | 600 | Almost dry | CH=0 |
| PET 2mm | Y | 600 | Almost dry | CH=0 |
| PET 2mm | no (ref. ) | - | - | CH=5 |
| Filled PP | X | 600 | Dry | CH=0 |
| Filled PP | Y | 600 | Wet | CH=2 |
| Filled PP | no (ref. ) | - | - | CH=5 |
| PE film | X | 600 | Dry | CH=0 |
| PE film | Y | 600 | Almost dry | CH=0 |
| PE film | no (ref. ) | - | - | CH=4 |
| PE 6mm | X | 600 | Dry | CH=0 |
| PE 6mm | Y | 600 | Almost dry | CH=0 |
| PE 6mm | no (ref. ) | - | - | CH=4 |
| PMMA 2mm | X | 600 | Almost dry | CH=0 |
| PMMA 2mm | Y | 600 | Almost dry | CH=4 |
| PMMA 2mm | no (ref. ) | - | - | CH=5 |
| Acrylate | X | 600 | Dry | CH=3 |
| Acrylate | Y | 600 | Dry | CH=0 |
| Acrylate | no (ref. ) | - | - | CH=5 |

The results in the table above shows the potential to cure a dry or almost dry film on a variety of polymer substrate and that the film in turn provides improved adhesion to both the substrate and a subsequent top coat.

### Example 10, different monomer pairs

The following monomers and oligomers were used: AIPE (unsaturated polyester where unsaturation is from maleic anhydride coreacted with multifunctional alcohols, Sir Industriale, Italy), Styrene (Sigma Aldrich), Rapi-Cure DVE-3 (triethyleneglycol divinylether) "DVE3", SR350D (trimethylolpropane triacrylate, Arkema), APE (pentaerythritol allyl ether, Perstorp chemicals), BMI 1500 (difunctional maleimide, Caplinq) "BMI", Ebecryl 2221 (multifunctional acrylate from Allnex Belgium SA/NV) "Eb2221", SR 9020 (trifunctional acrylate, Sartomer) SR238 (HDDA, hexane diol diacrylate, Arkema). These monomers and oligomers were used to make ten different monomer mixes, mixed in weight ratios according to the tables below. To all ten monomer mixes 2.4 wt% Speedcure-2 ITX from Lambson Limited (photoinitiator) was added, creating ten corresponding formulations.

| **1** | | **2** | | **3** | | **4** | | **5** | |
|---|---|---|---|---|---|---|---|---|---|
| **Polyester Styrene** | | **Polyester acrylate** | | **Polyester DVE3** | | **DVE3 trimethacryl ate** | | **APE Ebecryl 2221** | |
| AIPE | 70% | AIPE | 80% | AIPE | 70% | DVE3 | 60% | APE | 35 % |
| Styren | 30% | SR238 | 20% | DVE3 | 30% | SR350D | 40% | Eb2221 | 65% |

| **6** | | **7** | | **8** | | **9** | | **10** | |
|---|---|---|---|---|---|---|---|---|---|
| **Maleimide DVE3** | | **Ebecryl 2221 DVE3** | | **Ebecryl 2221 Acrylate** | | **Ebecryl 2221 Acrylate** | | **Ebecryl 2221 Acrylate** | |
| BMI | 70% | Eb2221 | 50% | Eb2221 70% | | Eb2221 | 30% | Eb2221 | 10% |
| DVE3 | 30% | DVE3 | 50% | SR9020 | 30% | SR9020 | 70% | SR9020 | 90 % |

All percentages are by weight.

The above formulations were applied at 1g/m² thickness on a 50 µm thick PET film from Mitsubishi, cured according to the table below where N denotes the number of passes under the lamps at 135 mJ/cm² (UVA) per pass. After evaluation of the state of cure, where AD+ (short for "Almost dry plus" denotes the state just before the film is fully dried according to the explanations on evaluation of dryness in previous examples. The samples were coated with UT 7710 (a Bona acrylate top coat) using a 22 micron rod. The top coat was cured with 1.2 J/cm² (UVA) as measured in UVA using the same equipment as in previous examples.

The results are presented in the below table. All exposures written in the table as "mJ" refers to "mJ/cm2 (UVA)".

| **Formulation No described above)** | **(as Exposure For AD+** | **Double dose** | **Cross-hatch at AD+** | **Cross-hatch at double dose** |
|---|---|---|---|---|
| **1** | N=9 | N=18 | CH=1 | CH=5 |
| | 1215 mJ | 2430 mJ | | |
| **2** | N=11 | N=22 | CH=1 | CH=1 |
| | 1485 mJ | 2970 mJ | | |
| **3** | N=8 | N=16 | CH=0 | CH=1 |
| | 1080 mJ | 2160 mJ | | |
| **4** | N=17 | N=34 | CH=0 | CH=0 |
| | 2295 mJ | 4590 mJ | | |
| **5** | N= 6 | N=12 | CH=0 | CH=1 |
| | 810mJ | 1620 mJ | | |
| **6** | N=1 | N=2 | CH=0 | CH=0 |
| | 135 mJ | 270 mJ | | |
| **7** | N=4 | N=8 | CH=0 | CH=0 |
| | 540 mJ | 1080 mJ | | |
| **8** | N=5 | N=10 | CH=4 | CH=5 |
| | 675 mJ | 1350mJ | | |
| **9** | N=9 | N=18 | CH=5 | CH=5 |
| | 1215 mJ | 2430 mJ | | |
| **10** | N=13 | N=26 | CH=4 | CH=5 |
| | 1755 mJ | 3510 mJ | | |

The example shows the applicability of the invention for several monomer pairs, all characterized by a very large process window with respect to UV exposure, and very good adhesion to a PET foil. Formulation 8, 9, and 10 consisting of an acrylate oligomer and an acrylate monomer with photoinitiator, gives poor adhesion between the top coat and the substrate when the formulation is cured to an almost dry state, showing the detrimental effect of high rates of homopolymerization of the reactive groups utilized for interlayer adhesion to the top coat when a dry film is needed in the manufacturing process.

### Example 11

A cured and dry Formulation X film on 50pm thick PET film from Toray prepared according to Example 9, was stored for 5 months in the dark at room temperature. An acrylate top coat was applied and cured according to Example 9. The results are presented in the below table.

| **Substrate** | **Surface** | **Cross-hatch** |
|---|---|---|
| Toray PET | Formulation X, dry, stored for 5 months | 0 |
| Toray PET | No primer | 5 |

The above example shows that reactivity towards an acrylate top coat remains intact after an extended storage period at room temperature.

### Example 12

In order to test the effect of UV-dose on the primer (in particular the effect of UV-doses (high doses) on adhesion to the next coating layer, several different UV-doses was tested.

The "PET 2mm", a 2 mm thick sheet of white PET (Polyethylene terephthalate) bought from Nordbergs Tekniska AB was cut into smaller pieces and used as substrates. The pieces were wiped clean with a dry piece of tissue paper.

The primers formulation used were "Formulation X", containing 49.4 wt% Ebecryl 2221 from Allnex Belgium SA/NV, 49.4 wt% Rapi-Cure DVE-3, and 1.6 wt% Speedcure-2 ITX from Lambson Limited.

A thin layer of "Formulation X" was applied in an approximately 1 µm thick layer (1g/sqm) on the substrates as primers. The substrates with the primer layer was put in a curing device comprising a conveyor belt and a fixed medium pressure mercury lamp that gives light in UVA, UVB, UVC and UW, and there exposed to different UV-doses as presented in the table below.

The surface properties of the primer layer directly after UV-exposure was tested using a gloved finger and a spatula to determine if the primer layer had cured or not. If the gloved finger or spatula left traces in the primer layer, the surface was determined to be "wet". If the gloved finger or spatula did not leaved any traces in the primer layer, the surface was determined to be "dry". If parts of the surface was dry, and other parts were wet, or the very faint traces could be observed, the surface was determined to be "almost dry". These results are presented under "Surface properties" in the table below.

Subsequently, a thicker layer of the UV-curing acrylate-based topcoat from Bona AB (UE1664) was applied using a 22 um rod applicator on top of the primer layer and was given a UV dose of 1.4 J/cm² (UVA) in the same curing device, which rendered the layers fully cured and dry.

The adhesion of the coating layers to the substrate was tested using a standard tape test ("cross-hatch test") in accordance with the cross-cut test described in ISO 2409. In short, cuts are made through the coating to the substrate in a square pattern with 25 areas each being approximately 1mm². The tape was pressed onto the coating and pulled off quickly. The resulting damage are evaluated by evaluating the amount of coating that has been removed by the tape, where CH=0 is the best adhesion (no removal of coating), and CH=5 is the worst adhesion (all or almost all coating is removed).

As a reference, no primer layer was applied on substrates before the 22 µm thick UV-curing acrylate-based topcoat was applied, cured, and tested in the same way as described above.

The results are presented in the below table.

| **Substra te** | **Primer** | **UV (mJ/cm2 UVA)** | **Surface properties** | **Cross-hatch** |
|---|---|---|---|---|
| PET 2mm | no (ref.) | - | N.A. | CH=5 |
| PET 2mm | X | 100 | Wet | CH=0 |
| PET 2mm | X | 300 | Wet | CH=0 |
| PET 2mm | X | 600 | Almost dry | CH=0 |
| PET 2mm | X | 1200 | Dry | CH=0 |
| PET 2mm | X | 2400 | Dry | CH=0 |

The results in the table above shows that the primer can form a film and can withstand large amounts of excessive UV, beyond what is film forming, and still provide good adhesion to the top coat.

### Example 13, several different substrates

Several different common plastics were used as substrates, the following were obtained from Norbergs Tekniska AB:
PPO (polyphenyleneoxide) quality "grey-blue 6 mm", ABS (acrylonitrilie butadiene styrene copolymer) quality "white 2 mm", PVC-XT (extruded polyvinyl chloride) quality "grey 1 mm", HIPS (high impact polystyrene) quality "white 2 mm", PEEK (polyether ether ketone) quality "nature calendered 2 mm", PMMA (polymethyl methacrylate) "clear transparent 4 mm", and PC (polycarbonate) quality "clear transparent 1 mm".

A sample of PS (polystyrene) was cut from the lid of a 150 mm large polystyrene petri dish, obtained from VWR.

An acrylate surface was prepared by applying a 12 µm thick layer of UT7710 (a Bona acrylate top coat) on top of a substrate with good adhesion to UT7710, and curing it with a dose of 1.4 mJ/cm² (UVA) from a medium pressure mercury lamp.

The substrates were wiped with a lint free paper before use, but no other cleaning or surface activation was conducted. Formulation Y was applied at approximately 1 µm thick layer (1g/m²).

The substrate with the primer layer cured using a device comprising a conveyor belt and a fixed medium pressure mercury lamp that gives light in UVA, UVB, UVC and UVV. The substrate with the primer layer was passed multiple times through the curing device, each pass exposing the primer and substrate to 135 mJ/cm² (UVA). After each pass (pass 1 to 6) the surface properties of the primer was evaluated using a gloved finger and a spatula in the same way as in the examples above.

In the table below "W" is short for "wet", "AD" is short for "almost dry", "D" is short for "dry, and "AD+" is short for "almost dry plus" i.e. a state just between "almost dry" and "dry".

At 6 passes or 810 mJ/cm² (UVA) all samples were dry or almost dry and UT7710 (a Bona acrylate top coat) was applied using a 22 micron rod and cure for 1.4 J/cm² (UVA) and cross-hatch was evaluated. Another set of samples were subjected to the double dose (1620 mJ/cm² UVA) and treated and tested with cross-hatch. As a reference, substrates were coated with UT 7710 without formulation Y pretreatment, called "No primer" in the table below. The experiments with the double UV dose and the references without the primer (Y pretreatment) had exactly the same top coat, which was applied in the same way.

The results are presented in the below table. All exposures written in the table as "mJ" refers to "mJ/cm2 (UVA)".

| | **Surface Properties** | | | | | | **Cross-hatch** | | |
|---|---|---|---|---|---|---|---|---|---|
| **Substrate** | **135 mJ** | **270 mJ** | **405 mJ** | **540 mJ** | **675 mJ** | **810 mJ** | **810 mJ** | **1620 mJ** | **No primer** |
| PPO | W | AD | AD | AD | AD+ | D | 0 | 0 | 4 |
| ABS | W | AD | AD | AD | AD+ | D | 0 | 0 | 0 |
| PVC-XT | W | AD | AD | AD | AD+ | AD+ | 0 | 0 | 3 |
| HIPS | W | W | AD | AD | AD | D | 0 | 0 | 5 |
| PEEK | W | W | AD | AD | AD | D | 0 | 0 | 4 |
| PMMA | W | W | AD | AD | AD+ | D | 0 | 1 | 5 |
| PS | W | W | AD | AD | AD+ | D | 0 | 4 | 5 |
| PC | W | W | AD | AD+ | D | D | 0 | 0 | 5 |
| Acrylate | W | W | W | AD | AD+ | D | 0 | 3 | 5 |

The example shows good effect on several plastics without the need for abrasive, solvent or corona pretreatment. It shows the ability to withstand overexposure on most substrate types. The evolution of dryness also illustrates the extremely broad processing window, tolerant to both over and under exposure, since already the AD state is compatible with many industrial processes.

### Example 14

In order to test the effect of UV-dose on the primer (in particular the effect of UV-doses on adhesion to the substrate and the next coating layer, several different UV-doses was tested.

The "PC" a 1 mm thick sheet of transparent PC (polycarbonate) bought from Nordbergs Tekniska AB was cut into smaller pieces and used as substrates. The pieces were wiped clean with a dry piece of tissue paper.

The primer formulation used were "Formulation X", containing 49.4 wt% Ebecryl 2221 from Allnex Belgium SA/NV, 49.4 wt% Rapi-Cure DVE-3, and 1.6 wt% Speedcure-2 ITX from Lambson Limited.

A thin layer of "Formulation X" was applied in an approximately 1 µm thick layer (1g/sqm) on the substrates as primers. The substrates with the primer layer was put in a curing device comprising a conveyor belt and a fixed medium pressure mercury lamp that gives light in UVA, UVB, UVC and UW, and there exposed to different UV-doses as presented in the table below.

The surface properties of the primer layer directly after UV-exposure was tested using a gloved finger and a spatula to determine if the primer layer had cured or not. If the gloved finger or spatula left traces in the primer layer, the surface was determined to be "wet". If the gloved finger or spatula did not leaved any traces in the primer layer, the surface was determined to be "dry". If parts of the surface was dry, and other parts were wet, or the very faint traces could be observed, the surface was determined to be "almost dry". These results are presented under "Surface properties" in the table below.

Subsequently, a thicker layer of the UV-curing acrylate-based topcoat from Bona AB (UE1664) was applied using a 22 um rod applicator on top of the primer layer and was given a UV dose of 1.4 J/cm² (UVA) in the same curing device, which rendered the layers fully cured and dry.

The adhesion of the coating layers to the substrate was tested using a standard tape test ("cross-hatch test") in accordance with the cross-cut test described in ISO 2409. In short, cuts are made through the coating to the substrate in a square pattern with 25 areas each being approximately 1mm². The tape was pressed onto the coating and pulled off quickly. The resulting damage are evaluated by evaluating the amount of coating that has been removed by the tape, where CH=0 is the best adhesion (no removal of coating), and CH=5 is the worst adhesion (all or almost all coating is removed).

As a reference, no primer layer was applied on substrates before the 22 µm thick UV-curing acrylate-based topcoat was applied, cured, and tested in the same way as described above.

The results are presented in the below table.

| **Substrate** | **Primer** | **UV (mJ/cm2 UVA)** | **Surface properties** | **Cross-hatch** |
|---|---|---|---|---|
| PC | no (ref.) | - | N.A. | CH=5 |
| PC | X | 405 | Almost dry | CH=0 |
| PC | X | 540 | AD+ | CH=0 |
| PC | X | 675 | Dry | CH=0 |
| PC | X | 810 | Dry | CH=0 |
| PC | X | 1620 | Dry | CH=0 |

The results in the table above shows that the primer performs well over a large range of UV-doses.

### Example 15

In order to test the concept of the primer in inert conditions a hermetically sealed box, Addixx Inert Box (Model IB-K162504SR-UF quartz window, Addixx Specialities, Büdingen, Germany) was used. Addixx Inert Box is equipped with a quartz window in the top lid to enable UV irradiation of its contents, and two valves to enable purging the atmospheric gas with an inert gas.

Chemical nitrogen (extra clean nitrogen gas, < 5ppm O₂ and humidity, from Linde Industrigaser, Sweden) was connected to the Addixx Inert Box, and downstream from that, another hermetically sealed box in which an oxygen detector (Greisinger GMH3692 Oxygen detector with sensor GGO381) was placed.

A primer formulation "Formulation Z", containing 50 wt% Ebecryl 2221 from Allnex Belgium SA/NV and 50 wt% Rapi-Cure DVE-3 (triethyleneglycol divinylether) was prepared. A thin layer of Formulation Z was applied in an approximately 1 µm thick layer (1g/sqm) on a 50pm thick PET film from Toray. The PET film with the primer layer was put in the Addixx Inert Box, which was purged with Nitrogen gas for several minutes, until a reading of the Oxygen Detector was <0.5% (<5000 ppm), after which the valves were closed. The Nitrogen filled Addixx Inert Box containing primed PET film was then placed in a curing device comprising a conveyor belt and a fixed medium pressure mercury lamp that gives light in UVA, UVB, UVC and UW. Different UV-doses were tested.

The surface properties of the primer layer directly after UV-exposure was tested using a gloved finger and a spatula to determine if the primer layer had cured or not. If the gloved finger or spatula left traces in the primer layer, the surface was determined to be "wet". If the gloved finger or spatula did not leaved any traces in the primer layer, the surface was determined to be "dry". If parts of the surface was dry, and other parts were wet, or the very faint traces could be observed, the surface was determined to be "almost dry". If the surface was sticky to the touch of the gloved finger, the surface was determined to be "sticky". These results are presented under "Surface properties" in the table below.

Subsequently, a thicker layer of the UV-curing acrylate-based topcoat from Bona AB (UT7710) was applied using a 22 um rod applicator on top of the primer layer and was given a UV dose of 1.4 J/cm² (UVA) in the same curing device, in atmospheric conditions, which rendered the layers fully cured and dry.

The adhesion of the coating layers to the substrate was tested using a standard tape test ("cross-hatch test") in accordance with the cross-cut test described in ISO 2409. In short, cuts are made through the coating to the substrate in a square pattern with 25 areas each being approximately 1mm². The tape was pressed onto the coating and pulled off quickly. The resulting damage are evaluated by evaluating the amount of coating that has been removed by the tape, where CH=0 is the best adhesion (no removal of coating), and CH=5 is the worst adhesion (all or almost all coating is removed).

As a reference, no primer layer was applied on the PET film before the 22 µm thick UV-curing acrylate-based topcoat was applied, cured, and tested in the same way as described above.

The results are presented in the table below.

| **Substrate** | **Primer** | **UV (mJ/cm2 UVA)** | **Surface properties** | **Cross-hatch** |
|---|---|---|---|---|
| PET film | no (ref.) | - | N.A. | CH=5 |
| PET film | Z | 100 (inert conditions) | Dry | CH=0 |
| PET film | Z | 200 (inert conditions) | Dry | CH=0 |

The results in the table above shows that the primer performs well in inert conditions and over a large range of UV-doses.

## Claims

1. A method of coating a substrate, the method comprising the sequential steps of:
a) providing a substrate, said substrate comprising at least one chemical group selected from the group consisting of an aromatic ring, a sulphur, and a peroxide, wherein at least a fraction of the at least one chemical groups are at the surface of the substrate,
b) contacting at least a part of the substrate surface with one of:
i) a compound comprising at least one carbon-carbon double bond, wherein the compound optionally comprises a chemical group capable of abstracting a hydrogen, and
ii) a mixture comprising a first monomer M₁ and a second monomer M₂, wherein the monomers are capable of undergoing a polymerization reaction to form a copolymer covalently bound to the substrate, wherein at least one of ratios r₁ and r₂ is smaller than 0.45, and wherein one of k₁₁ and k₂₂ is at least 10 times larger than the other one, with the exception for r₂=r₂=0 when the condition regarding k₂₁ and k₂₂ does not apply, wherein r₁ = k₁₁/k₁₂ and r₂ = k₂₂/k₂₂,
wherein k₁₁ is the propagation rate constant for the propagation reaction of adding a monomer M₁ to a growing copolymer chains ~M₁*,
wherein k₁₂ is the propagation rate constant for the propagation reaction of adding a monomer M₂ to a growing copolymer chains ~M₁*,
wherein k₂₁ is the propagation rate constant for the propagation reaction of adding a monomer M₁ to a growing copolymer chains ~M₂*,
wherein k₂₂ is the propagation rate constant for the propagation reaction of adding a monomer M₂ to a growing copolymer chains ~M₂*,
and wherein the first monomer M₂ and the second monomer M₂ are one of the following options
i) M₁ is an acrylate and M₂ is a maleate,
ii) M₁ is an acrylate and M₂ is a vinyl ether,
iii) M₁ is a methacrylate and M₂ a vinyl ether,
iv) M₁ is an acrylate and M₂ is an allyl ether,
v) M₁ is a methacrylate and M₂ is a maleate,
vi) M₁ is a methacrylate and M₂ is a maleimide,
vii) M₁ is an acrylate and M₂ is a maleimide,
viii) M₁ is a vinyl ether and M₂ is a maleate, and
ix) M₁ is a styrene and M₂ is a maleate,
c) initiating a reaction with actinic radiation to form a covalent bond by reaction of the at least one chemical group at the surface of the substrate and i) the compound or ii) the monomers M₁ and M₂, so that a i) polymer or ii) copolymer covalently bound to the substrate surface is formed,
d) applying at least one of a coating and a sheet on the substrate surface, and
e) curing the at least one coating.

2. The method according to claim 1, wherein the method further comprises a step where at least a part of the i) compound or ii) the mixture, which has not reacted to form covalent bonds is removed after step c).

3. The method according to any one of claims 1-2, wherein the substrate comprises at least one selected from the group selected from polyolefins, polymers containing aromatic groups, polymers containing ether groups, and polymers containing sulphur.

4. The method according to any one of claims 1-3, wherein the substrate comprises at least one selected from the group consisting of polyethylene terephthalate (PET), polypropylene (PP), polyethylene (PE), polymethylmethacrylate (PMMA), poly p-phenylene oxide (PPO), acrylonitrile butadiene styrene (ABS), polyvinylchloride (PVC), polystyrene (PS), polyether ether ketone (PEEK), and polycarbonate (PC).

5. The method according to any one of claims 1-4, wherein the surface prior to step b) is treated with at least one selected from the group consisting of corona treatment, plasma treatment and flame treatment.

6. The method according to any one of claims 1-5, wherein there is an electron withdrawing group adjacent to the at least one carbon-carbon double bond in the compound.

7. The method according to any one of claims 1-6, wherein there are electron withdrawing groups on both sides of the at least one carbon-carbon double bond in the compound.

8. The method according to any one of claims 1-7, wherein the substrate surface is further contacted with at least one compound comprising at least one thiol group in step b).

9. The method according to claim 8, wherein the ratio (r) in step b) between the number of thiol groups and the number of carbon-carbon double bonds fulfils 0.05 ≤ r ≤ 20.

10. The method according to claim 8, wherein the ratio (r) in step b) between the number of thiol groups and the number of carbon-carbon double bonds fulfils 0.2 ≤ r ≤ 5.

11. The method according to claim 8, wherein the ratio (r) in step b) between the number of thiol groups and the number of carbon-carbon double bonds fulfils one of 0.3 ≤ r ≤ 0.9 and 1.1 ≤ r ≤ 3.

12. The method according to any one of claims 1-11, wherein a Norrish type II photoinitiator is contacted with the substrate surface in step b).

13. The method according to any one of claims 1-12, wherein i) the compound or ii) the mixture to be applied in step b) is provided in an acidic mixture.

14. The method according to any one of claims 1-13, wherein all components to be added in step b) are provided in a single formulation.

15. The method according to any one of claims 1-14, wherein the compound is contacting with at least a part of the substrate surface by ink-jet in step b).

## Patentansprüche

1. Verfahren zum Beschichten eines Substrats, wobei das Verfahren die aufeinanderfolgenden Schritte umfasst:
a) Bereitstellen eines Substrats, wobei das Substrat mindestens eine chemische Gruppe, ausgewählt aus der Gruppe bestehend aus einem aromatischen Ring, einem Schwefel und einem Peroxid, umfasst, wobei mindestens ein Teil der mindestens einen chemischen Gruppe sich an der Oberfläche des Substrats befindet,
b) Inkontaktbringen mindestens eines Teils der Substratoberfläche mit einem von:
i) einer Verbindung, die mindestens eine Kohlenstoff-Kohlenstoff-Doppelbindung umfasst, wobei die Verbindung gegebenenfalls eine chemische Gruppe umfasst, die in der Lage ist, einen Wasserstoff zu abstrahieren, und
ii) einer Mischung, die ein erstes Monomer M₁ und ein zweites Monomer M₂ umfasst, wobei die Monomere in der Lage sind, eine Polymerisationsreaktion einzugehen, um ein kovalent an das Substrat gebundenes Copolymer zu bilden, wobei mindestens eines der Verhältnisse r₁ und r₂ kleiner ist als 0,45 und wobei eines von k₁₁ und k₂₂ mindestens 10-mal größer ist als das andere, mit Ausnahme von r₁ = r₂ = 0, wenn die Bedingung für k₁₁ und k₂₂ nicht zutrifft, wobei r₁ = k₁₁/k₁₂ und r₂ = k₂₂/k₂₁,
wobei k₁₁ die Ausbreitungsgeschwindigkeitskonstante für die Ausbreitungsreaktion der Zugabe eines Monomers M₁ zu wachsenden Copolymerketten ~Mi* ist,
wobei k₁₂ die Ausbreitungsgeschwindigkeitskonstante für die Ausbreitungsreaktion der Zugabe eines Monomers M₂ zu wachsenden Copolymerketten ~Mi* ist,
wobei k₂₁ die Ausbreitungsgeschwindigkeitskonstante für die Ausbreitungsreaktion der Zugabe eines Monomers M₁ zu wachsenden Copolymerketten -M₂* ist,
wobei k₂₂ die Ausbreitungsgeschwindigkeitskonstante für die Ausbreitungsreaktion der Zugabe eines Monomers M₂ zu wachsenden Copolymerketten -M₂* ist,
und wobei das erste Monomer M₁ und das zweite Monomer M₂ eine der folgenden Optionen sind
i) M₁ ist ein Acrylat und M₂ ist ein Maleat,
ii) M₁ ist ein Acrylat und M₂ ist ein Vinylether,
iii) M₁ ist ein Methacrylat und M₂ ist ein Vinylether,
iv) M₁ ist ein Acrylat und M₂ ist ein Allylether,
v) M₁ ist ein Methacrylat und M₂ ist ein Maleat,
vi) M₁ ist ein Methacrylat und M₂ ist ein Maleimid,
vii) M₁ ist ein Acrylat und M₂ ist ein Maleimid,
viii) M₁ ist ein Vinylether und M₂ ist ein Maleat und
ix) M₁ ist ein Styrol und M₂ ist ein Maleat,
c) Initiieren einer Reaktion mit aktinischer Strahlung unter Bildung einer kovalenten Bindung durch Reaktion der mindestens einen chemischen Gruppe an der Oberfläche des Substrats und i) der Verbindung oder ii) den Monomeren M₁ und M₂, so dass ein i) Polymer oder ii) Copolymer, das kovalent an die Substratoberfläche gebunden ist, gebildet wird,
d) Aufbringen mindestens eines aus einer Beschichtung und einer Folie auf die Substratoberfläche und
e) Aushärten der mindestens einen Beschichtung.

2. Verfahren nach Anspruch 1, wobei das Verfahren weiterhin einen Schritt umfasst, bei dem mindestens ein Teil der i) Verbindung oder ii) der Mischung, der nicht unter Bildung kovalenter Bindungen reagiert hat, nach Schritt c) entfernt wird.

3. Verfahren nach einem der Ansprüche 1-2, wobei das Substrat mindestens eines, ausgewählt aus der Gruppe bestehend aus Polyolefinen, Polymeren mit aromatischen Gruppen, Polymeren mit Ethergruppen und Polymeren mit Schwefel, umfasst.

4. Verfahren nach einem der Ansprüche 1-3, wobei das Substrat mindestens eines, ausgewählt aus der Gruppe bestehend aus Polyethylenterephthalat (PET), Polypropylen (PP), Polyethylen (PE), Polymethylmethacrylat (PMMA), Poly-p-phenylenoxid (PPO), Acrylnitril-Butadien-Styrol (ABS), Polyvinylchlorid (PVC), Polystyrol (PS), Polyetheretherketon (PEEK) und Polycarbonat (PC), umfasst.

5. Verfahren nach einem der Ansprüche 1-4, wobei die Oberfläche vor Schritt b) mit mindestens einer Behandlung, ausgewählt aus der Gruppe bestehend aus Koronabehandlung, Plasmabehandlung und Flammenbehandlung, behandelt wird.

6. Verfahren nach einem der Ansprüche 1-5, wobei neben der mindestens einen Kohlenstoff-Kohlenstoff-Doppelbindung in der Verbindung eine elektronenziehende Gruppe vorhanden ist.

7. Verfahren nach einem der Ansprüche 1-6, wobei auf beiden Seiten der mindestens einen Kohlenstoff-Kohlenstoff-Doppelbindung in der Verbindung elektronenziehende Gruppen vorhanden sind.

8. Verfahren nach einem der Ansprüche 1-7, wobei die Substratoberfläche in Schritt b) außerdem mit mindestens einer Verbindung in Kontakt gebracht wird, die mindestens eine Thiolgruppe umfasst.

9. Verfahren nach Anspruch 8, wobei das Verhältnis (r) in Schritt b) zwischen der Anzahl der Thiolgruppen und der Anzahl der Kohlenstoff-Kohlenstoff-Doppelbindungen 0,05 ≤ r ≤ 20 erfüllt.

10. Verfahren nach Anspruch 8, wobei das Verhältnis (r) in Schritt b) zwischen der Anzahl der Thiolgruppen und der Anzahl der Kohlenstoff-Kohlenstoff-Doppelbindungen 0,2 ≤ r ≤ 5 erfüllt.

11. Verfahren nach Anspruch 8, wobei das Verhältnis (r) in Schritt b) zwischen der Anzahl der Thiolgruppen und der Anzahl der Kohlenstoff-Kohlenstoff-Doppelbindungen eines von 0,3 ≤ r ≤ 0,9 und 1,1 ≤ r ≤ 3 erfüllt.

12. Verfahren nach einem der Ansprüche 1-11, wobei in Schritt b) ein Norrish-Typ-II-Photoinitiator mit der Substratoberfläche in Kontakt gebracht wird.

13. Verfahren nach einem der Ansprüche 1-12, wobei i) die Verbindung oder ii) die Mischung, die in Schritt b) aufgetragen werden soll, in einer sauren Mischung bereitgestellt wird.

14. Verfahren nach einem der Ansprüche 1-13, wobei alle in Schritt b) hinzuzufügenden Komponenten in einer einzigen Formulierung bereitgestellt werden.

15. Verfahren nach einem der Ansprüche 1-14, wobei die Verbindung in Schritt b) mittels Tintenstrahl mit mindestens einem Teil der Substratoberfläche in Kontakt gebracht wird.

## Revendications

1. Procédé de revêtement d'un substrat, le procédé comprenant les étapes séquentielles de :
a) fourniture d'un substrat, ledit substrat comprenant au moins un groupe chimique sélectionné dans le groupe consistant en un cycle aromatique, du soufre et un peroxyde, dans lequel au moins une fraction du au moins un groupe chimique est à la surface du substrat,
b) mise en contact d'au moins une partie de la surface de substrat avec l'un parmi :
i) un composé comprenant au moins une double liaison carbone-carbone, dans lequel le composé comprend éventuellement un groupe chimique apte à extraire un hydrogène, et
ii) un mélange comprenant un premier monomère M₁ et un second monomère M₂, dans lequel les monomères sont aptes à subir une réaction de polymérisation pour former un copolymère lié de manière covalente au substrat, dans lequel au moins l'un des rapports r₁ et r₂ est inférieur à 0,45, et dans lequel l'un de k₂₁ et k₂₂ est au moins 10 fois supérieur à l'autre, à l'exception de r₂=r₂=0 lorsque la condition concernant k₁₁ et k₂₂ ne s'applique pas, dans lequel r₁ = k₁₁/k₁₂ et r₂ = k₂₂/k₂₁,
dans lequel k₁₁ est la constante de vitesse de propagation pour la réaction de propagation d'ajout d'un monomère M₁ à des chaînes de copolymère croissantes ~M₁*,
dans lequel k₁₂ est la constante de vitesse de propagation pour la réaction de propagation d'ajout d'un monomère M₂ à des chaînes de copolymère croissantes ~M₁*,
dans lequel k₂₁ est la constante de vitesse de propagation pour la réaction de propagation d'ajout d'un monomère M₁ à des chaînes de copolymère croissantes ~M₂*,
dans lequel k₂₂ est la constante de vitesse de propagation pour la réaction de propagation d'ajout d'un monomère M₂ à des chaînes de copolymère croissantes ~M₂*,
et dans lequel le premier monomère M₁ et le second monomère M₂ sont l'une des options suivantes
i) M₁ est un acrylate et M₂ est un maléate,
ii) M₁ est un acrylate et M₂ est un éther vinylique,
iii) M₁ est un méthacrylate et M₂ est un éther vinylique,
iv) M₁ est un acrylate et M₂ est un éther allylique,
v) M₁ est un méthacrylate et M₂ est un maléate,
vi) M₁ est un méthacrylate et M₂ est un maléimide,
vii) M₁ est un acrylate et M₂ est un maléimide,
viii) M₁ est un éther vinylique et M₂ est un maléate, et
ix) M₁ est un styrène et M₂ est un maléate,
c) amorçage d'une réaction avec une radiation actinique pour former une liaison covalente par réaction du au moins un groupe chimique à la surface du substrat et i) du composé ou ii) des monomères M₁ et M₂, de sorte qu'un i) polymère ou ii) copolymère lié de manière covalente à la surface de substrat soit formé,
d) application d'au moins un parmi un revêtement et une feuille sur la surface de substrat, et
e) durcissement du au moins un revêtement.

2. Procédé selon la revendication 1, dans lequel le procédé comprend en outre une étape où au moins une partie du i) composé ou ii) du mélange, qui n'a pas réagi pour former des liaisons covalentes est retirée après l'étape c) .

3. Procédé selon l'une quelconque des revendications 1-2, dans lequel le substrat comprend au moins un sélectionné dans le groupe sélectionné parmi des polyoléfines, des polymères contenant des groupes aromatiques, des polymères contenant des groupes éther, et des polymères contenant du soufre.

4. Procédé selon l'une quelconque des revendications 1-3, dans lequel le substrat comprend au moins un sélectionné parmi le groupe consistant en le polyéthylène téréphtalate (PET), le polypropylène (PP), le polyéthylène (PE), le polyméthacrylate de méthyle (PMMA), le poly(oxyde de p-phénylène) (PPO), l'acrylonitrile butadiène styrène (ABS), le polychlorure de vinyle (PVC), le polystyrène (PS), le polyéther éther cétone (PEEK), et le polycarbonate (PC).

5. Procédé selon l'une quelconque des revendications 1-4, dans lequel la surface avant l'étape b) est traitée avec au moins un sélectionné dans le groupe consistant en un traitement corona, un traitement par plasma et un traitement à la flamme.

6. Procédé selon l'une quelconque des revendications 1-5, dans lequel est présent un groupe attracteur d'électrons adjacent à la au moins une double liaison carbone-carbone dans le composé.

7. Procédé selon l'une quelconque des revendications 1-6, dans lequel sont présents des groupes attracteurs d'électrons des deux côtés de la au moins une double liaison carbone-carbone dans le composé.

8. Procédé selon l'une quelconque des revendications 1-7, dans lequel la surface de substrat est en outre mise en contact avec au moins un composé comprenant au moins un groupe thiol à l'étape b).

9. Procédé selon la revendication 8, dans lequel le rapport (r) à l'étape b) entre le nombre de groupes thiol et le nombre de doubles liaisons carbone-carbone satisfait à 0,05 ≤ r ≤ 20.

10. Procédé selon la revendication 8, dans lequel le rapport (r) à l'étape b) entre le nombre de groupes thiol et le nombre de doubles liaisons carbone-carbone satisfait à 0,2 ≤ r ≤ 5.

11. Procédé selon la revendication 8, dans lequel le rapport (r) à l'étape b) entre le nombre de groupes thiol et le nombre de doubles liaisons carbone-carbone satisfait à l'un parmi 0,3 ≤ r ≤ 0,9 et 1,1 ≤ r ≤ 3.

12. Procédé selon l'une quelconque des revendications 1-11, dans lequel un photo-initiateur Norrish de type II est mis en contact avec la surface de substrat à l'étape b).

13. Procédé selon l'une quelconque des revendications 1-12, dans lequel i) le composé ou ii) le mélange à appliquer à l'étape b) est fourni dans un mélange acide.

14. Procédé selon l'une quelconque des revendications 1-13, dans lequel tous les composants à ajouter à l'étape b) sont fournis en une seule formulation.

15. Procédé selon l'une quelconque des revendications 1-14, dans lequel le composé est mis en contact avec au moins une partie de la surface de substrat par jet d'encre à l'étape b).
